# EUROPÄISCHE PATENTSCHRIFT

(11) **EP 1 418 116 B1**
(45) Veröffentlichungstag und Bekanntmachung des Hinweises auf die Patenterteilung: **14.02.2007**
(21) Anmeldenummer: 03025092.2
(22) Anmeldetag: 03.11.2003
(51) Int. Cl.: B62D 65/06

(54) **Verfahren und Vorrichtung zur Schliesskeilsimulation**
Process and device to lock a door by a locking wedge
Procédé et dispositif de verrouillage de porte à l'aide d'un coin de verrouillage

(30) Priorität: 05.11.2002 DE 10251393
(43) Veröffentlichungstag der Anmeldung: 12.05.2004
(73) Patentinhaber: inos Automationssoftware GmbH, 70563 Stuttgart (DE)
(72) Erfinder: Tassakos, Charalambos Dr.-Ing., 52146 Würselen (DE); Metge, Jan-Thomas, 70193 Stuttgart (DE)
(74) Vertreter: Dreiss, Fuhlendorf, Steimle & Becker

(56) Entgegenhaltungen:
- EP-A- 0 147 530
- EP-A- 0 261 297
- DE-A- 3 942 662

## Beschreibung

Die vorliegende Erfindung betrifft ein Verfahren zum Einstellen der Spaltmaße zwischen einer beweglichen Klappe eines Kraftfahrzeugs und der übrigen Karosserie des Kraftfahrzeugs. Bei dem Verfahren wird die Klappe zunächst in einer grob justierten Einbauposition bündig zu der Karosserie eingepasst und gehalten, dann derart fein justiert, dass vorgebbare Spaltmaße möglichst genau eingehalten werden, und schließlich in der fein justierten Einbauposition an der Karosserie beweglich festgelegt.

Die Erfindung betrifft außerdem eine Vorrichtung zum Einstellen der Spaltmaße zwischen einer beweglichen Klappe eines Kraftfahrzeugs und der übrigen Karosserie des Kraftfahrzeugs. Die Vorrichtung umfasst Mittel zum Einpassen und Halten der Klappe in einer grob justierten Einbauposition bündig zu der Karosserie, Mittel zum Erfassen der Spaltmaße und Mittel zum Einpassen und zum beweglichen Festlegen der Klappe in einer fein justierten Einbauposition, in der vorgebbare Spaltmaße möglichst genau eingehalten werden.

Im Rahmen der Montage von Kraftfahrzeugen werden u. a. die Klappen eingebaut. Klappen sind insbesondere die Türen des Kraftfahrzeugs, aber auch die Motorhaube und der Kofferraumdeckel oder die Heckklappe. Die Klappen werden in entsprechende Einbauöffnungen in der Karosserie eingesetzt und in einer geeigneten Einbauposition an Scharnieren oder Gelenken an der Karosserie beweglich befestigt. Eine geeignete Einbauposition ist dadurch charakterisiert, dass die Klappen bündig mit der übrigen Karosserie bzw. mit angrenzenden Klappen abschließen und gleichmäßig zu der übrigen Karosserie bzw. zu den angrenzenden Klappen beabstandet sind. Man spricht in diesem Zusammenhang davon, dass in der Einbauposition vorgebbare Spaltmaße (Breite und Versatz) eingehalten werden.

Aus dem Stand der Technik ist es bekannt, die Klappe an den Scharnieren oder Gelenken an der Karosserie in einer grob justierten Einbauposition zu befestigen. In den Spalt zwischen der Klappe und der übrigen Karosserie bzw. angrenzenden Klappen wird mindestens ein keilförmiges Element, ein sog. Schließkeil, eingesetzt, um die Klappe bündig zu der Karosserie in die Einbauöffnung einzupassen. Dann erfolgt die Feinjustage der Klappe derart, dass vorgebbare Spaltmaße möglichst genau eingehalten werden. Dabei muss stets darauf geachtet werden, dass der Schließkeil die Klappe noch bündig zu der Karosserie hält. Schließlich wird die Klappe in der fein justierten Einbauposition an den Scharnieren oder Gelenken beweglich festgelegt. Der Einsatz eines Schließkeils ist jedoch sehr aufwendig und zudem recht ungenau.

Deshalb wurden andere Verfahren entwickelt, die eine Montage der Klappen eines Kraftfahrzeugs und insbesondere das Einstellen der Spaltmaße zwischen den Klappen und der übrigen Karosserie bzw. angrenzenden Klappen ohne einen Schließkeil ermöglichen (sog. Schließkeilsimulation). In der einfachsten Ausgestaltung wird anstatt eines Schließkeils ein magnetisches Element von außen im Bereich des Spaltes zwischen einer einzubauenden Klappe und der übrigen Karosserie bzw. angrenzenden Klappen derart auf die Karosserie gelegt, dass es sowohl die Klappe als auch die übrige Karosserie bzw. die angrenzenden Klappen überdeckt. Der Einsatz eines Magneten zur Schließkeilsimulation ist jedoch ebenfalls sehr aufwendig und zudem recht ungenau.

Es wurde des weiteren ein relativ aufwendiges Verfahren zur Schließkeilsimulation entwickelt, bei dem die gesamte Fahrzeugkarosserie mittels einer sog. Aushebestation in eine vorgegebene Position im dreidimensionalen Raum positioniert werden muss. Bei dem Verfahren ist eine Vorrichtung zur Schließkeilsimulation vorgesehen, die einen mechanischen Anschlag, der zum einen auf der übrigen Karosserie bzw. auf bereits fertig eingebauten angrenzenden Klappen und zum anderen auf der einzubauenden Klappe aufliegt und einen pneumatischen Sauger, welcher die einzubauende Klappe gegen den Anschlag zieht, umfasst. Diese mechanischen und pneumatischen Werkzeuge zur Schließkeilsimulation werden mittels einer Handhabungsvorrichtung, die bspw. als ein Gelenkarmroboter ausgebildet ist, verfahren. Die Handhabungsvorrichtung ist mit den daran befestigten Werkzeugen in einer absoluten Position im dreidimensionalen Raum positioniert. Durch die Positionierung der Karosserie im dreidimensionalen Raum wird die Karosserie in eine bestimmte Position relativ zu den Werkzeugen zur Schließkeilsimulation gebracht. Bei diesem bekannten Verfahren findet also die Schließkeilsimulation in einer vorgegebenen absoluten Position im dreidimensionalen Raum statt, was die Positionierung der gesamten Karosserie erforderlich macht. Das ist jedoch mit einem enormen Aufwand verbunden und die Kosten für eine solche Schließkeilsimulation sind sehr hoch.

Ein Verfahren und eine Vorrichtung gemäß dem Oberbegriff der Ansprüche 1 und 7 ist aus der Patentschrift DE 3942662 A bekannt.

Der vorliegenden Erfindung liegt die Aufgabe zugrunde, eine vereinfachte und kostengünstige Schließkeilsimulation zu ermöglichen, die nach wie vor ein hochgenaues Einpassen einer Klappe in die übrige Karosserie eines Kraftfahrzeugs erlaubt.

Zur Lösung dieser Aufgabe schlägt die vorliegende Erfindung ausgehend von dem Verfahren der eingangs genannten Art vor, dass die Klappe zur Feinjustage durch einen pneumatischen Sauger gegen einen mechanischen Anschlag gezogen wird, wobei der mechanische Anschlag in einem festen Bezug relativ zu der übrigen Karosserie steht und um eine im Wesentlichen vertikal verlaufende Drehachse frei verschwenkbar ist.

Ein wichtiger Aspekt der vorliegenden Patentanmeldung ist in der Verschwenkbarkeit des mechanischen Anschlags um die Drehachse zu sehen. Das erlaubt innerhalb eines vorgebbaren Bereichs eine beliebige Positionierung der Fahrzeugkarosserie im dreidimensionalen Raum. Die Position des Anschlags kann durch Verschwenken um die Drehachse in eine bestimmte Position relativ zu der Karosserie gebracht werden. Bei der vorliegenden Erfindung erfolgt die Schließkeilsimulation somit nicht in einer absoluten Position im dreidimensionalen Raum, sondern in einer bestimmten Relativposition zwischen Karosserie und mechanischem Anschlag. Dadurch ergeben sich entscheidende Vereinfachungen und damit verbunden deutliche Kosteneinsparungen bei dem Einpassen und der Montage von Klappen an der Fahrzeugkarosserie.

Zusätzlich kann der mechanische Anschlag auch um eine weitere Drehachse, die im Wesentlichen horizontal verläuft, verschwenkt werden. Dadurch ergeben sich weitere Freiheitsgrade für die Positionierung des Anschlags relativ zu der Fahrzeugkarosserie. Denkbar ist auch die Kombination der Verschwenkbarkeit um die beiden Drehachsen mittels eines geeigneten Gelenks, bspw. eines Kugelgelenks.

Das Verschwenken des mechanischen Anschlags um die Drehachsen erfolgt vorzugsweise ohne einen gesonderten Antrieb. Der Anschlag wird an die einzupassende Klappe heranbewegt und kommt auf der übrigen Karosserie bzw. einer angrenzenden bereits eingebauten Klappe oder auf der einzupassenden Klappe zumindest punktuell zur Auflage. Bei einem weiteren Heranbewegen des Anschlags in Richtung auf die einzupassende Klappe wird der Anschlag um die Drehachsen verschwenkt bis er auf der übrigen Karosserie bzw. der angrenzenden bereits eingebauten Klappe und auf der einzupassenden Klappe vollflächig zur Auflage kommt. In dieser Position wird die einzupassende Klappe dann durch den pneumatischen Sauger gegen den Anschlag gesaugt, die Position der Klappe relativ zu der übrigen Karosserie fein justiert und die Klappe schließlich in der fein justierten Einbauposition an Scharnieren oder Gelenken beweglich festgelegt.

Gemäß einer vorteilhaften Weiterbildung der vorliegenden Erfindung wird vorgeschlagen, dass der feste Bezug des mechanischen Anschlags zu der übrigen Karosserie dadurch erzielt wird, dass der mechanische Anschlag an mindestens einem Auflagepunkt an der übrigen Karosserie und an mindestens einem weiteren Auflagepunkt an der Klappe zur Auflage gebracht wird, und dass die Drehachse in einer im Wesentlichen senkrecht zur Flächenerstreckung der Klappe verlaufenden Richtung betrachtet zwischen den Auflagepunkten liegt. Die Anschlagpunkte sind vorzugsweise flächig ausgebildet, wobei die Form der Anschlagflächen vorzugsweise an die Form der entsprechenden übrigen Karosserie bzw. der einzupassenden Klappe angepasst ist. Zudem ist vorzugsweise die Ausrichtung der Auflageflächen relativ zueinander an die Ausrichtung der entsprechenden übrigen Karosserie zu der einzupassenden Klappe angepasst. Der mechanische Anschlag bildet eine Verlängerung der Oberfläche der übrigen Karosserie bzw. der bereits eingebauten Klappen. Durch Ansaugen der einzupassenden Klappe an den Anschlag wird dann eine Positionierung der Klappe bündig mit der übrigen Karosserie bzw. mit den bereits eingebauten Klappen erzielt.

Gemäß einer bevorzugten Ausführungsform der Erfindung wird vorgeschlagen, dass der mechanische Anschlag durch eine Handhabungsvorrichtung der Klappe im Wesentlichen senkrecht zur Flächenerstreckung der Klappe angenähert wird. Die Handhabungsvorrichtung ist bspw. als ein Gelenkarmroboter ausgebildet.

Gemäß einer anderen vorteilhaften Weiterbildung der vorliegenden Erfindung wird vorgeschlagen, dass der mechanische Anschlag und der pneumatische Sauger eine Schließkeilsimulations-Einheit bilden, die um eine im Wesentlichen vertikal verlaufende gemeinsame Drehachse verschwenkbar ist, und die Einheit der Klappe im Wesentlichen senkrecht zur Flächenerstreckung der Klappe so weit angenähert wird bis der mechanische Anschlag an mindestens zwei Auflagepunkten auf der übrigen Karosserie zur Auflage kommt und die Klappe dann durch den pneumatischen Sauger gegen den mechanischen Anschlag gezogen wird. Zusätzlich kann die Schließkeilsimulations-Einheit auch um eine weitere Drehachse, die im Wesentlichen horizontal verläuft, verschwenkt werden. Denkbar ist auch die Kombination der Verschwenkbarkeit um die beiden Drehachsen mittels eines geeigneten Gelenks, bspw. eines Kugelgelenks.

Als eine weitere Lösung der Aufgabe der vorliegenden Erfindung wird ausgehend von der Vorrichtung der eingangs genannten Art vorgeschlagen, dass die Mittel zum Einpassen der Klappe in der fein justierten Einbauposition einen mechanischen Anschlag und einen pneumatischen Sauger aufweisen, wobei der mechanische Anschlag in einem festen Bezug relativ zu der übrigen Karosserie steht und um eine im Wesentlichen vertikal verlaufende Drehachse frei verschwenkbar ist und wobei der pneumatische Sauger die Klappe gegen den mechanischen Anschlag zieht.

Gemäß einer vorteilhaften Weiterbildung der vorliegenden Erfindung wird vorgeschlagen, dass der mechanische Anschlag dadurch in einem festen Bezug relativ zu der übrigen Karosserie steht, dass der mechanische Anschlag an mindestens einem Auflagepunkt an der übrigen Karosserie und an mindestens einem weiteren Auflagepunkt an der Klappe aufliegt, und dass die Drehachse in einer im Wesentlichen senkrecht zur Flächenerstreckung der Klappe verlaufenden Richtung betrachtet zwischen den Auflagepunkten liegt.

Gemäß einer bevorzugten Ausführungsform der vorliegenden Erfindung wird vorgeschlagen, dass der mechanische Anschlag durch ein erstes Federelement im Wesentlichen senkrecht zur Flächenerstreckung der Klappe federnd gelagert ist. Der Anschlag wird an die einzupassende Klappe heranbewegt und kommt auf der übrigen Karosserie bzw. einer angrenzenden bereits eingebauten Klappe oder auf der einzupassenden Klappe zumindest punktuell zur Auflage. Bei einem weiteren Heranbewegen des Anschlags in Richtung auf die einzupassende Klappe wird der Anschlag um die Drehachsen verschwenkt bis er auf der übrigen Karosserie bzw. der angrenzenden bereits eingebauten Klappe und auf der einzupassenden Klappe vollflächig zur Auflage kommt. Eine weitere Bewegung des mechanischen Anschlags in Richtung der einzupassenden Klappe im Wesentlichen senkrecht zur Flächenerstreckung der Klappe wird durch Federelemente aufgefangen. Dadurch kann der mechanische Anschlag durch eine einfache Steuerung an die einzupassende Klappe heranbewegt werden; eine positionsgeregelte Annäherung ist nicht erforderlich. Abweichungen zwischen dem Sollweg und dem tatsächlichen Weg, der im Rahmen der Steuerung zur Annäherung des Anschlags an die einzupassende Klappe zurückgelegt wird, können durch die Federelemente ausgeglichen werden, ohne dass es zu einer Beschädigung der Karosserie kommt.

Vorteilhafterweise ist der mechanische Anschlag durch ein zweites Federelement in einer bevorzugten Verschwenkposition um die Drehachse federnd gehalten. Beim Annähern des Anschlags an die übrige Karosserie bzw. die bereits eingebauten Klappen und an die einzupassende Klappe wird der Anschlag entgegen der Federkraft des Federelements so weit um die Drehachse verschwenkt, bis er auf der übrige Karosserie bzw. auf den bereits eingebauten Klappen und auf der einzupassenden Klappe zur Auflage kommt.

Um die Vorrichtung kleinbauender und leichter handhabbar zu machen, wird vorgeschlagen, dass der pneumatische Sauger und der mechanische Anschlag als eine Schließkeilsimulations-Einheit ausgebildet sind, die um eine gemeinsame Drehachse verschwenkbar ist. Die Einheit kann an einer gemeinsamen Handhabungsvorrichtung bewegt und auf der übrigen Karosserie bzw. den bereits eingebauten Klappen und der einzupassenden Klappe zur Auflage gebracht werden.

Besonders vorteilhaft ist es, den pneumatischen Sauger als einen Faltenbalgsauger auszubilden, wobei der Teil des mechanischen Anschlags, an dem die einzupassende Klappe zur Auflage kommt, im Innenraum des Faltenbalgs angeordnet ist. Dadurch können die Abmessungen der Vorrichtung weiter verringert werden.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: eine schematische Draufsicht auf eine erfindungsgemäße Vorrichtung teilweise im Schnitt gemäß einer ersten bevorzugten Ausführungsform;
- Fig. 2: eine Draufsicht auf die erfindungsgemäße Vorrichtung aus Fig. 1 im Detail;
- Fig. 3: eine Ansicht von vorne auf die erfindungsgemäße Vorrichtung aus Fig. 1; und
- Fig. 4: eine Draufsicht auf eine erfindungsgemäße Vorrichtung gemäß einer zweiten bevorzugten Ausführungsform.

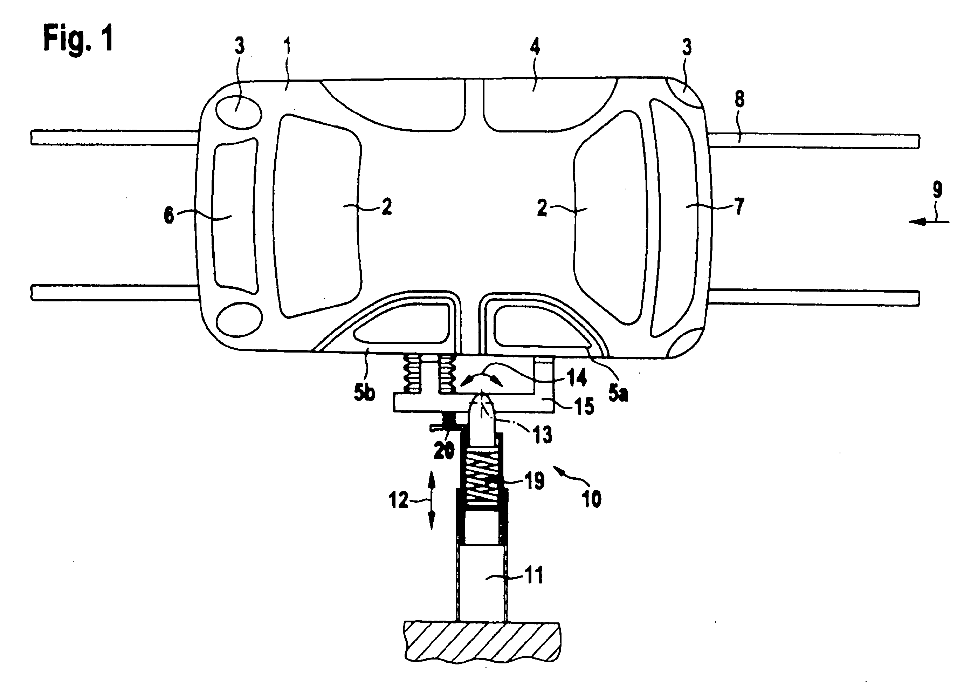

In Fig. 1 ist eine Kraftfahrzeugkarosserie mit dem Bezugszeichen 1 bezeichnet. Die Karosserie 1 weist Einbauöffnungen 2 für Windschutz- und Heckscheibe und Einbauöffnungen 3 für Scheinwerfer und Rückleuchten auf. Außerdem weist die Karosserie 1 Einbauöffnungen 4 für Türen 5, eine Einbauöffnung 6 für eine Motorhaube (nicht dargestellt) und eine Einbauöffnung 7 für einen Kofferraumdeckel oder eine Heckklappe (nicht dargestellt) auf. Die Türen 5, die Motorhaube und die Heckklappe bzw. der Kofferraumdeckel werden auch unter der Bezeichnung Klappen zusammengefasst.

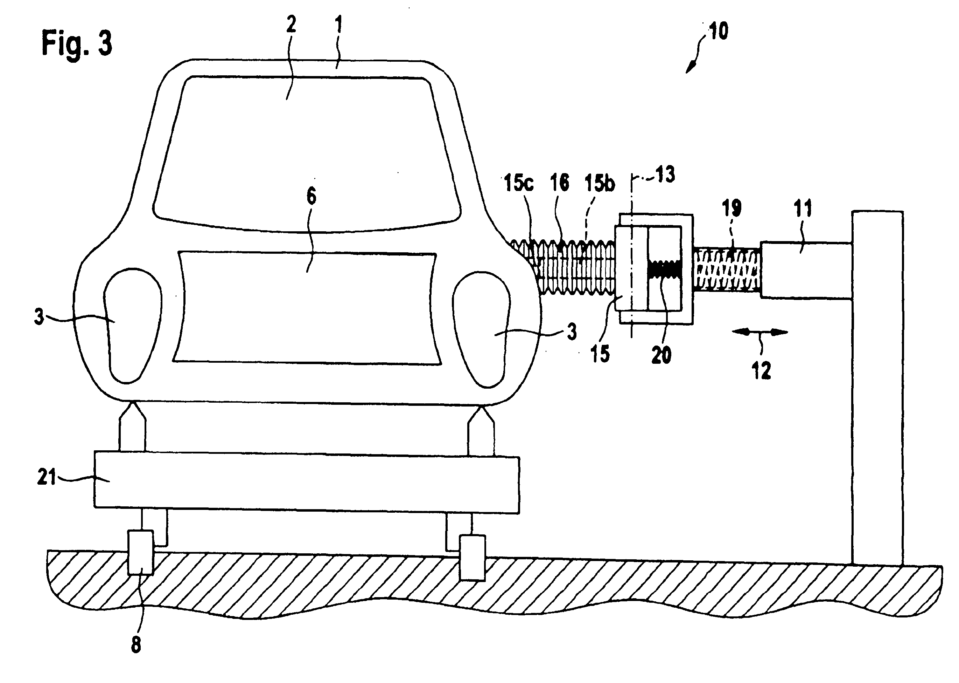

Die Karosserie 1 wird auf einem Montageband 21 (vgl. Fig. 3) an verschiedenen Montagestationen, u. a. auch an einer in Fig. 1 dargestellten Station zum Einbauen der Klappen 5 vorbeibewegt. Das Montageband 21 kann als ein führerloses Transportsystem (FTS) oder beliebig anders ausgebildet sein, insbesondere kann die Karosserie 1 auf dem Montageband 21 befestigt oder an das Montageband gehängt sein. In dem vorliegenden Ausführungsbeispiel aus Fig. 1 ist das Montageband 21 als ein FTS ausgebildet, auf dem die Karosserie 1 befestigt ist und das mit Hilfe in den Boden eingelassener Führungsschienen oder Induktionsschleifen 8 einen vorgebbaren Weg in Richtung eines Pfeils 9 abfährt.

Im Rahmen der Montage von Kraftfahrzeugen werden u. a. die Klappen 5 in die Einbauöffnungen 4, 6, 7 eingebaut. Die Klappen 5 werden in die Einbauöffnungen 4, 6, 7 in der Karosserie 1 eingesetzt und in einer geeigneten Einbauposition an Scharnieren oder Gelenken an der Karosserie 1 beweglich befestigt. Eine geeignete Einbauposition ist dadurch charakterisiert, dass die Klappen 5 einerseits bündig mit der übrigen Karosserie 1 bzw. mit angrenzenden bereits eingebauten Klappen 5 abschließen und gleichmäßig zu der übrigen Karosserie bzw. zu den angrenzenden Klappen beabstandet sind. Man spricht in diesem Zusammenhang davon, dass in der Einbauposition vorgebbare Spaltmaße (Breite und Versatz) eingehalten werden.

Bei dem in Fig. 1 dargestellten Ausführungsbeispiel wird zunächst die Türe 5a hinten links eingebaut. Dabei stellt die übrige Fahrzeugkarosserie 1 zumindest teilweise eine Referenzfläche dar, an der die Türe 5a ausgerichtet wird. Die eingebaute Türe 5a ist nach ihrem Einbau Teil der übrigen Fahrzeugkarosserie 1. Anschließend wird die Türe 5b vorne links eingebaut. Dabei stellt die eingebaute Türe 5a nun ihrerseits zumindest teilweise eine Referenzfläche dar, an der die Türe 5b ausgerichtet wird.

Die Tür 5b wird zunächst in einer grob justierten Einbauposition bspw. mittels eines Handhabungsgeräts (nicht dargestellt) in die Einbauöffnung 4 vorne links eingesetzt und über die Scharniere oder Gelenke an der Karosserie 1 befestigt. Anschließend werden die Spalte zwischen der Tür 5b und der übrigen Karosserie 1 bzw. den angrenzenden bereits eingebauten Klappen 5a vermessen und die Tür 5b in der Einbauöffnung 4 derart fein justiert, dass die vorgegebenen Spaltmaße eingehalten werden. Für die Feinjustierung der Klappen 5 in den Einbauöffnungen 4, 6, 7 können aus dem Stand der Technik an sich bekannte Verfahren und Vorrichtungen angewandt werden. Insbesondere ist daran gedacht, zum Erfassen der Spaltmaße Bilderkennungs- und Bildverarbeitungsmittel einzusetzen. In der fein justierten Einbauposition wird die Tür 5b dann über die Scharniere oder Gelenke beweglich an der Karosserie 1 festgelegt. Beweglich bedeutet in diesem Zusammenhang, dass die Klappen zwar geöffnet werden können, aber im Wesentlichen spielfrei an der Karosserie 1 befestigt sind. Damit ist der Einbau der Türen 5a, 5b auf der linken Seite des Kraftfahrzeugs abgeschlossen.

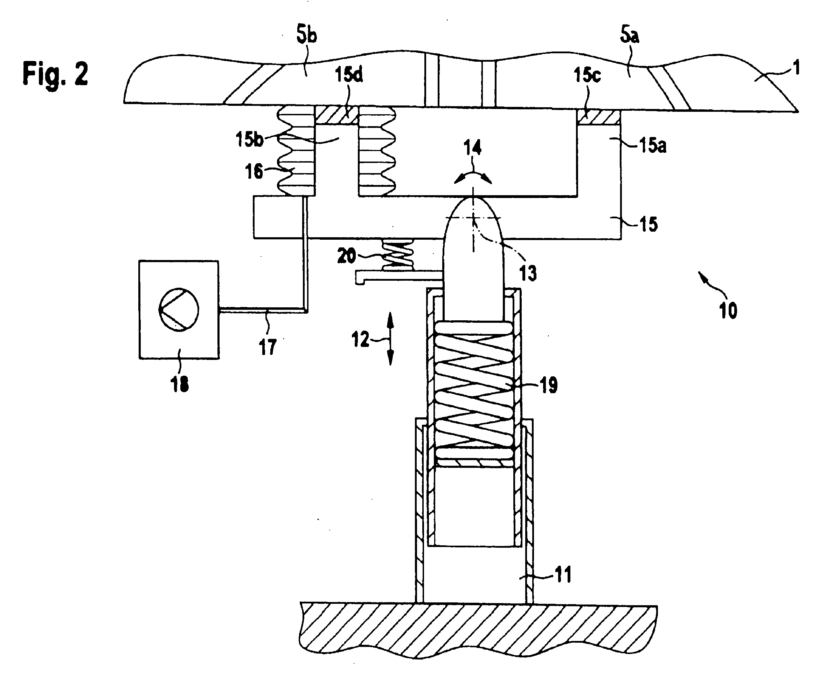

Die vorliegende Erfindung betrifft insbesondere die Feinjustierung der Klappen 5 in den Einbauöffnungen 4, 6, 7. Um die Türen 5 während der Feinjustierung in der Einbauöffnung 4 zu halten ist eine erfindungsgemäße Vorrichtung vorgesehen, die in ihrer Gesamtheit mit dem Bezugszeichen 10 bezeichnet ist. Die Vorrichtung 10 ist im Detail in Fig. 2 dargestellt. Entsprechende Vorrichtungen sind in der in Fig. 1 dargestellten Station zum Einbauen der Klappen 5 für die Feinjustierung der Türen auf der rechten Fahrzeugseite in den Einbauöffnungen 4, der Motorhaube in der Einbauöffnung 6 und der Heckklappe bzw. des Kofferraumdeckels in der Einbauöffnung 7 vorgesehen, aber in Fig. 1 zur Verbesserung der Übersichtlichkeit nicht dargestellt.

Die Vorrichtung 10 ist mittels einer Handhabungsvorrichtung 11 in einer im Wesentlichen senkrecht zu der Flächenerstreckung der Türen 5 verlaufenden Richtung (Doppelpfeil 12) bewegbar. Die Handhabungsvorrichtung 11 ist bspw. als ein Portalroboter ausgebildet, wobei die Vorrichtung 10 an dem distalen Ende eines Roboterarms um eine Drehachse 13 verschwenkbar (Doppelpfeil 14) befestigt ist. Die Vorrichtung 10 umfasst einen mechanischen Anschlag 15. Ein Teil 15a des mechanischen Anschlags 15 liegt an der übrigen Karosserie 1, bzw. an der bereits eingebauten Tür 5a auf. Ein anderer Teil 15b des Anschlags 15 liegt an der einzupassenden Tür 15b auf. Die Auflageflächen 15c, 15d des Anschlags 15 mit der Karosserie 1 bzw. den Türen 5 sind durch geeignete Dämpfungselemente gepolstert, um eine Beschädigung der Karosserie 1 bzw. der Türen 5 zu vermeiden. Die Dämpfungselemente bestehen bspw. aus Kunststoff, Gummi oder Schaumstoff.

Der Teil 15b des Anschlags 15 ist im Inneren eines Faltenbalgsaugers 16 angeordnet. Dieser steht über eine Druckleitung 17 mit einer Unterdruckerzeugungseinrichtung 18 in Verbindung. Selbstverständlich kann der Teil 15b des Anschlags 15 auch außerhalb des Faltenbalgsaugers 16 angeordnet sein.

Mittels eines ersten Federelements 19 ist die Vorrichtung 10 im Wesentlichen senkrecht zur Flächenerstreckung der Klappe (Doppelpfeil 12) federnd gelagert. Der mechanische Anschlag 15 und der pneumatische Sauger 16 werden mittels eines zweiten Federelements 20 in einer vorgebbaren Verschwenkposition um die Drehachse 13 federnd gehalten.

Zum Einsetzen der Tür 5b in der Einbauöffnung 4 wird die Tür 5b zunächst in einer grob justierten Einbauposition in die Einbauöffnung 4 eingesetzt und über die Scharniere oder Gelenke an der Karosserie 1 befestigt. Dann wird die Vorrichtung 10 im Wesentlichen senkrecht zu der Flächenerstreckung der einzupassenden Tür 5b auf diese zubewegt. Der Teil 15a kommt über eine Vielzahl von Auflagepunkten der Auflagefläche 15c an der angrenzenden bereits eingebauten Tür 5a zur Auflage. Der Faltenbalgsauger 16 kommt an der einzupassenden Tür 5b zur Auflage und saugt die Tür 5b gegen die weitere Auflagefläche 15d des anderen Teils 15b des Anschlags 15 an. Während der Vermessung der Spaltmaße zwischen der Tür 5b und der übrigen Karosserie 1 bzw. der bereits eingebauten Klappe 5a wird die Tür 5b durch die Vorrichtung 10 bündig mit der übrigen Karosserie 1 bzw. der bereits eingebauten Tür 5a als Teil der Karosserie 1 gehalten. Über das erste Federelement 19 kann ein Druck auf die einzupassende Tür 5b ausgeübt werden, so dass diese sicher in der Einbauposition gehalten wird. Dieser Vorgang wird als Schließkeilsimulation bezeichnet, da für diesen Zweck früher ein Schließkeil in den Spalt zwischen der einzupassenden Tür 5b und der übrigen Karosserie 1 eingekeilt wurde, durch den die Tür 5b bündig zu der übrigen Karosserie 1 gehalten wurde. Wenn die Tür 5b fein justiert ist, wird sie über die Scharniere oder Gelenke beweglich an der Karosserie 1 festgelegt.

In Fig. 3 ist die Station zum Einpassen der Klappen 5 mit der erfindungsgemäßen Vorrichtung 10 in einer Ansicht von vorne dargestellt. Gleiche Bauteile sind mit gleichen Bezugszeichen bezeichnet.

Ein wichtiger Aspekt der vorliegenden Erfindung ist darin zu sehen, dass die Schließkeilsimulation nicht in einer vorgegebenen absoluten Position im dreidimensionalen Raum erfolgt, sondern in einer (in gewissen Grenzen) beliebigen Relativposition zwischen dem Anschlag 15 und der einzupassenden Klappe 5 möglich ist. Dadurch kann eine aufwendige Positionierung der Fahrzeugkarosserie 1 im dreidimensionalen Raum entfallen. Es genügt völlig, wenn die Karosserie auf dem Montageband mit einer begrenzten Ungenauigkeit durch die in Fig. 1 dargestellte Station zum Einbauen der Klappen 5 hindurchfährt. Ungenauigkeiten der Relativposition zwischen der einzupassenden Klappe 5 und der Vorrichtung 10 zur Schließkeilsimulation können durch die Verschwenkbarkeit der Vorrichtung 10 um die Drehachse 13 und durch das erste Federelement 19 aufgefangen und ausgeglichen werden.

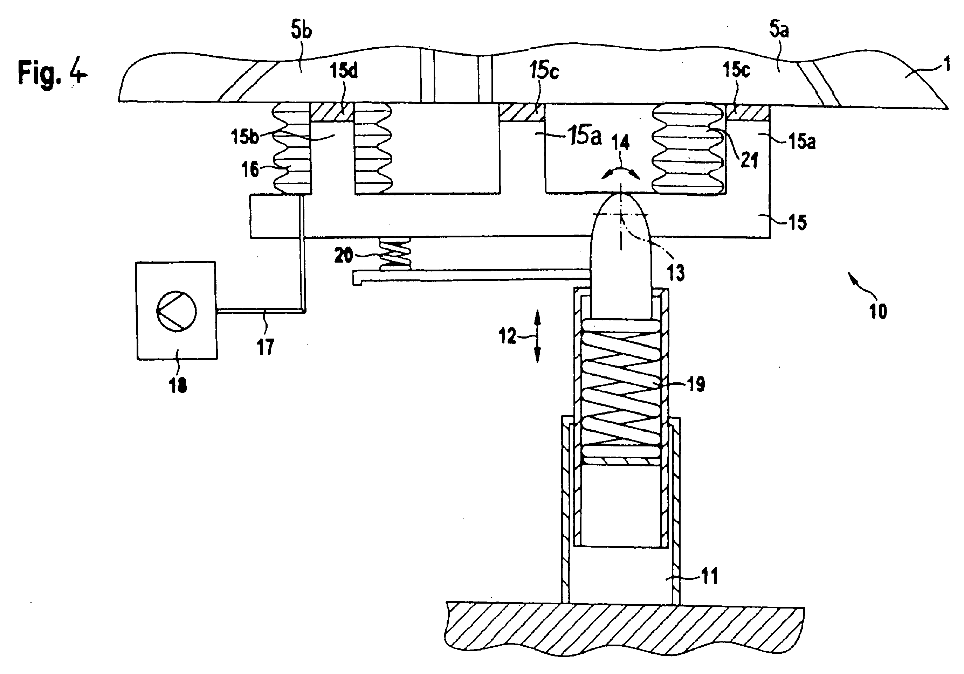

In Fig. 4 ist ein weiteres Ausführungsbeispiel der vorliegenden Erfindung dargestellt. Mit dem ersten Ausführungsbeispiel aus Fig. 2 übereinstimmende Bauteile sind mit den gleichen Bezugszeichen bezeichnet. Im Unterschied zu dem ersten Ausführungsbeispiel hat der Anschlag 15 der Vorrichtung 10 aus Fig. 4 zwei zueinander beabstandete Teile 15a, an deren Enden jeweils Auflageflächen 15c ausgebildet sind, die beide an der Karosserie 1 oder an einer bereits eingebauten Klappe 5a zur Auflage kommen. Die Drehachse 13 liegt im Bereich der beiden Teile 15a des Anschlags 15 bzw. der beiden Auflageflächen 15c. Durch die beiden Anschlagflächen 15c wird eine virtuelle Gerade gezogen, auf welcher auch die weitere Anschlagfläche 15d liegt und an welche die auszurichtende Klappe 5b herangezogen wird.

Im Bereich der beiden Teile 15a ist außerdem ein zweiter Faltenbalgsauger 21 vorgesehen, durch welchen die Vorrichtung 10 nach der Annäherung an die Karosserie 1 bzw. an die bereits eingebaute Klappe 5a dort festgesaugt wird, so dass diese Teile an den Auflageflächen 15c anliegen. Dies kann nützlich sein, wenn der Faltenbalgsauger 16 die auszurichtende Klappe 5b gegen die Anschlagfläche15d zieht, damit die Auflageflächen 15c nicht von der Karosserie 1 oder der bereits ausgerichteten Klappe 5a abgehoben werden. Der weitere Faltenbalgsauger 21 muss nicht unbedingt zwischen den beiden Anschlagflächen 15c angeordnet sein, sondern kann überall dort an dem Anschlag 15 vorgesehen sein, wo er bei Annäherung der Vorrichtung 10 an die Karosserie 1 an dieser oder an einer bereits eingebauten Klappe 5a anliegt.

Streng genommen können die Auflageflächen 15c, 15d durch einen einzigen Auflagepunkt gebildet sein. Dadurch besteht jedoch die Gefahr einer Beschädigung, insbesondere eines Einbeulens oder Zerkratzens, der Karosserie 1 bzw. der auszurichtenden Klappen 5; 5a, 5b. Um das zu vermeiden, werden die Kräfte nicht über einen einzigen Auflagepunkt, sondern über eine Vielzahl von Punkten der Auflageflächen 15c, 15d auf die Karosserie 1 bzw. die auszurichtenden Klappen 5; 5a, 5b übertragen.

## Patentansprüche

1. Verfahren zum Einstellen der Spaltmaße zwischen einer beweglichen Klappe (5; 5a, 5b) eines Kraftfahrzeugs und der übrigen Karosserie (1) des Kraftfahrzeugs, bei dem die Klappe (5; 5a, 5b) zunächst in einer grob justierten Einbauposition bündig zu der Karosserie (1) eingepasst und gehalten wird, dann derart fein justiert wird, dass vorgebbare Spaltmaße möglichst genau eingehalten werden, und schließlich in der fein justierten Einbauposition an der Karosserie (1) beweglich festgelegt wird, wobei die Klappe (5; 5a, 5b) zur Feinjustage durch einen pneumatischen Sauger (16) gegen einen mechanischen Anschlag (15) gezogen wird, wobei der mechanische Anschlag (15) in einem festen Bezug relativ zu der übrigen Karosserie (1) steht und um eine Drehachse (13) frei verschwenkbar ist und, **dadurch gekennzeichnet, dass** der feste Bezug des mechanischen Anschlags (15) zu der übrigen Karosserie (1) dadurch erzielt wird, dass der mechanische Anschlag (15) an mindestens einem Auflagepunkt (15c) an der übrigen Karosserie (1) und an mindestens einem weiteren Auflagepunkt (15d) an der Klappe (5; 5a, 5b) zur Auflage gebracht wird, und dass die Drehachse (13) in einer im Wesentlichen senkrecht zur Flächenerstreckung der Klappe (5; 5a, 5b) verlaufenden Richtung betrachtet zwischen den Auflagepunkten (15c, 15d) liegt.

2. Verfahren nach Anspruch 1, **dadurch gekennzeichnet, dass** die Drehachse (13) parallel zur Flächenerstreckung der Klappe (5; 5a, 5b), vorzugsweise vertikal verläuft.

3. Verfahren nach Anspruch 1 oder 2, **dadurch gekennzeichnet, dass** der mechanische Anschlag (15) an mindestens zwei Auflagepunkten (15c) an der übrigen Karosserie (1) und an mindestens einem weiteren Auflagepunkt (15d) an der Klappe (5; 5a, 5b) zur Auflage gebracht wird, und dass die Drehachse (13) in einer im Wesentlichen senkrecht zur Flächenerstreckung der Klappe (5; 5a, 5b) verlaufenden Richtung betrachtet im Bereich der mindestens zwei Auflagepunkte (15c) liegt.

4. Verfahren nach einem der Ansprüche 1 bis 3, **dadurch gekennzeichnet, dass** der mechanische Anschlag (15) durch eine Handhabungsvorrichtung (11) der Klappe (5; 5a, 5b) im Wesentlichen senkrecht zur Flächenerstreckung der Klappe (5; 5a, 5b) angenähert wird.

5. Verfahren nach einem der Ansprüche 1 bis 4, **dadurch gekennzeichnet, dass** der mechanische Anschlag (15) und der pneumatische Sauger (16) eine Schließkeilsimulations-Einheit (10) bilden, die um eine gemeinsame im Wesentlichen vertikal verlaufende Drehachse (13) verschwenkbar ist, und die Einheit (10) der in der grob justierten Einbauposition bündig zu der Karosserie (1) eingepassten und gehaltenen Klappe (5; 5a, 5b) im Wesentlichen senkrecht zur Flächenerstreckung der Klappe (5; 5a, 5b) so weit angenähert wird bis der mechanische Anschlag (15) an mindestens zwei Auflagepunkten (15c) auf der übrigen Karosserie (1) zur Auflage kommt und die Klappe (5; 5a, 5b) dann durch den pneumatischen Sauger (16) gegen den mechanischen Anschlag (15) gezogen wird.

6. Verfahren nach einem der Ansprüche 1 bis 5, **dadurch gekennzeichnet, dass** der Anschlag (15) durch einen weiteren pneumatischen Sauger (21) gegen die übrige Karosserie (1) gezogen wird.

7. Vorrichtung (10) zum Einstellen der Spaltmaße zwischen einer beweglichen Klappe (5; 5a, 5b) eines Kraftfahrzeugs und der übrigen Karosserie (1) des Kraftfahrzeugs, mit Mitteln zum Einpassen und Halten der Klappe (5; 5a, 5b) in einer grob justierten Einbauposition bündig zu der Karosserie (1), Mitteln zum Erfassen der Spaltmaße und Mitteln zum Einpassen und zum beweglichen Festlegen der Klappe (5; 5a, 5b) in einer fein justierten Einbauposition, in der vorgebbare Spaltmaße möglichst genau eingehalten werden, wobei die Mittel zum Einpassen der Klappe (5; 5a, 5b) in der fein justierten Einbauposition einen mechanischen Anschlag (15) und einen pneumatischen Sauger (16) aufweisen, wobei der mechanische Anschlag (15) in einem festen Bezug relativ zu der übrigen Karosserie (1) steht und um eine Drehachse (13) frei verschwenkbar ist, **dadurch gekennzeichnet, dass** der pneumatische Sauger (16) die Klappe (5; 5a, 5b) gegen den mechanischen Anschlag (15) zieht und wobei der mechanische Anschlag (15) dadurch in einem festen Bezug relativ zu der übrigen Karosserie (1) steht, dass der mechanische Anschlag (15) an mindestens einem Auflagepunkt (15c) an der übrigen Karosserie (1) und an mindestens einem weiteren Auflagepunkt (15d) an der Klappe (5; 5a, 5b) aufliegt, und dass die Drehachse (13) in einer im Wesentlichen senkrecht zur Flächenerstreckung der Klappe (5; 5a, 5b) verlaufenden Richtung betrachtet zwischen den Auflagepunkten (15c, 15d) liegt.

8. Vorrichtung (10) nach Anspruch 7, **dadurch gekennzeichnet, dass** die Drehachse (13) parallel zur Flächenerstreckung der Klappe (5; 5a, 5b), vorzugsweise vertikal verläuft.

9. Vorrichtung (10) nach Anspruch 7 oder 8, **dadurch gekennzeichnet, dass** der mechanische Anschlag (15) an mindestens zwei Auflagepunkten (15c) an der übrigen Karosserie (1) und an mindestens einem weiteren Auflagepunkt (15d) an der Klappe (5; 5a, 5b) aufliegt, und dass die Drehachse (13) in einer im Wesentlichen senkrecht zur Flächenerstreckung der Klappe (5; 5a, 5b) verlaufenden Richtung betrachtet im Bereich der mindestens zwei Auflagepunkte (15c) liegt.

10. Vorrichtung (10) nach einem der Ansprüche 7 bis 9, **dadurch gekennzeichnet, dass** der mechanische Anschlag (15) durch ein erstes Federelement (19) im Wesentlichen senkrecht zur Flächenerstreckung der Klappe (5; 5a, 5b) federnd gelagert ist.

11. Vorrichtung (10) nach einem der Ansprüche 7 bis 10, **dadurch gekennzeichnet, dass** der mechanische Anschlag (15) durch ein zweites Federelement (20) in einer bevorzugten Verschwenkposition um die Drehachse (13) federnd gehalten ist.

12. Vorrichtung (10) nach einem der Ansprüche 7 bis 11, **dadurch gekennzeichnet, dass** der pneumatische Sauger (16) und der mechanische Anschlag (15) als eine Schließkeilsimulations-Einheit (10) ausgebildet sind, die um eine gemeinsame Drehachse (13) verschwenkbar ist.

13. Vorrichtung (10) nach Anspruch 12, **dadurch gekennzeichnet, dass** der pneumatische Sauger (16) als ein Faltenbalgsauger ausgebildet und ein Teil (15b) des mechanischen Anschlags (15), an dem die Klappe (5; 5a, 5b) zur Auflage kommt, im Innenraum des Faltenbalgs angeordnet ist.

14. Vorrichtung (10) nach einem der Ansprüche 7 bis 13, **dadurch gekennzeichnet, dass** die Vorrichtung(10) einen weiteren pneumatischen Sauger (21) aufweist, welcher die Vorrichtung (10) an der übrigen Karosserie (1) festhält.

15. Vorrichtung (10) nach Anspruch 14, **dadurch gekennzeichnet, dass** der weitere pneumatische Sauger (21) im Bereich des mindestens einen Auflagepunkts (15c), an welchem die übrige Karosserie (1) anliegt, an dem Anschlag (15) angeordnet ist.

## Claims

1. Method for adjusting the gap dimensions between a movable flap (5; 5a, 5b) of a vehicle and the rest of the body (1) of the vehicle, in which the flap (5; 5a, 5b) is first fitted in and held in a roughly adjusted mounting position flush to the body (1), then is fine-adjusted in such a way that pre-specifiable gap dimensions are maintained as precisely as possible, and finally is movably fixed to the body (1) in the fine-adjusted mounting position, where the flap (5; 5a, 5b) is pulled for fine adjustment by a pneumatic suction device (16) against a mechanical stop (15), where the mechanical stop (15) is in a fixed relationship relative to the rest of the body (1) and can be freely swivelled around an axis of rotation (13), and **characterised in that** the fixed relationship of the mechanical stop (15) to the rest of the body (1) is achieved through the mechanical stop (15) being brought into contact with the rest of the body (1) at at least one contact point (15c) and with the flap (5; 5a, 5b) at at least one further contact point (15d), and through the axis of rotation (13) lying between the contact points (15c, 15d) when viewed in a direction running essentially perpendicularly to the surface extension of the flap (5; 5a, 5b).

2. Method according to claim 1, **characterised in that** the axis of rotation (13) runs parallel to the surface extension of the flap (5; 5a, 5b), preferably vertically.

3. Method according to claim 1 or 2, **characterised in that** the mechanical stop (15) is brought into contact with the rest of the body (1) at at least two contact points (15c) and with the flap (5; 5a, 5b) at at least one further contact point (15d), and that the axis of rotation (13) lies in the region of the at least two contact points (15c) when viewed in a direction running essentially perpendicularly to the surface extension of the flap (5; 5a, 5b).

4. Method according to one of the claims 1 to 3, **characterised in that** the mechanical stop (15) is brought close to the flap (5; 5a, 5b) by means of a handling device (11) essentially perpendicularly to the surface extension of the flap (5; 5a, 5b).

5. Method according to one of the claims 1 to 4, **characterised in that** the mechanical stop (15) and the pneumatic suction device (16) form a closing-wedge simulation unit (10) that can be swivelled about a common axis of rotation (13) running essentially vertically, and the unit (10) is brought essentially perpendicularly to the surface extension of the flap (5; 5a, 5b) close to the flap (5; 5a, 5b) which is fitted in and held flush to the body (1) in the roughly adjusted mounting position until the mechanical stop (15) comes into contact with the rest of the body (1) at at least two contact points (15c) and the flap (5; 5a, 5b) is then pulled by the pneumatic suction device (16) against the mechanical stop (15).

6. Method according to one of the claims 1 to 5, **characterised in that** the stop (15) is pulled by a further pneumatic suction device (21) against the rest of the body (1).

7. Device (10) for adjusting the gap dimensions between a movable flap (5; 5a, 5b) of a vehicle and the rest of the body (1) of the vehicle, with means for fitting in and holding the flap (5; 5a, 5b) in a roughly adjusted mounting position flush to the body (1), means for sensing the gap dimensions and means for fitting in and for movably fixing the flap (5; 5a, 5b) in a finely adjusted mounting position, in which pre-specifiable gap dimensions are maintained as precisely as possible, where the means for fitting in the flap (5; 5a, 5b) in the finely adjusted mounting position has a mechanical stop (15) and a pneumatic suction device (16), where the mechanical stop (15) is in a fixed relationship relative to the rest of the body (1) and can be freely swivelled about an axis of rotation (13), **characterised in that** the pneumatic suction device (16) pulls the flap (5; 5a, 5b) against the mechanical stop (15) and where the mechanical stop (15) is thereby in a fixed relationship relative to the rest of the body (1), that the mechanical stop (15) is in contact with the rest of the body (1) at at least one contact point (15c) and with the flap (5; 5a, 5b) at at least one further contact point (15d), and that the axis of rotation (13) lies between the contact points (15c, 15d) when viewed in a direction running essentially perpendicularly to the surface extension of the flap (5; 5a, 5b).

8. Device (10) according to claim 7, **characterised in that** the axis of rotation (13) runs parallel to the surface extension of the flap (5; 5a, 5b), preferably vertically.

9. Device (10) according to claim 7 or 8, **characterised in that** the mechanical stop (15) is in contact with the rest of the body (1) at at least two contact points (15c) and with the flap (5; 5a, 5b) at at least one further contact point (15d), and **in that** the axis of rotation (13) lies in the region of the at least two contact points (15c) when viewed in a direction running essentially perpendicularly to the surface extension of the flap (5; 5a, 5b).

10. Device (10) according to one of the claims 7 to 9, **characterised in that** the mechanical stop (15) is borne resiliently by a first spring element (19) essentially perpendicularly to the surface extension of the flap (5; 5a, 5b).

11. Device (10) according to one of the claims 7 to 10, **characterised in that** the mechanical stop (15) is held resiliently by a second spring element (20) in a preferred swivelling position about the axis of rotation (13).

12. Device (10) according to one of the claims 7 to 11, **characterised in that** the pneumatic suction device (16) and the mechanical stop (15) are designed as a closing-wedge simulation unit (10) which can be swivelled about a common axis of rotation (13).

13. Device (10) according to claim 12, **characterised in that** the pneumatic suction device (16) is designed as a folding bellows suction device and one part (15b) of the mechanical stop (15) with which the flap (5; 5a, 5b) is in contact is located in the interior of the folding bellows.

14. Device (10) according to one of the claims 7 to 13, **characterised in that** the device (10) has a further pneumatic suction device (21) which holds the device (10) firmly against the rest of the body (1).

15. Device (10) according to claim 14, **characterised in that** the further pneumatic suction device (21) is located next to the stop (15) in the region of the at least one contact point (15c) with which the rest of the body (1) is in contact.

## Revendications

1. Procédé permettant de régler les dimensions d'un espacement entre un vantail mobile (5 ; 5a, 5b) d'un véhicule automobile et le reste de la carrosserie (1) du véhicule automobile, selon lequel on ajuste et on maintient le vantail (5 ; 5a, 5b) en alignement avec la carrosserie (1) dans une position de montage ajustée tout d'abord grossièrement puis avec précision pour respecter des dimensions de l'espacement prédéfini le plus exactement possible, et enfin on le fixe de manière articulée à la carrosserie (1) dans la position de montage bien ajustée, le vantail (5 ; 5a, 5b) étant attiré au moyen d'une ventouse pneumatique (16) contre une butée mécanique (15) fixe par rapport au reste de la carrosserie (1) et pivotant librement autour d'un axe de rotation (13), afin de réaliser l'ajustage précis,
**caractérisé en ce que**
le positionnement fixe de la butée mécanique (15) par rapport au reste de la carrosserie (1) est atteint **en ce que** cette butée mécanique (15) vient reposer sur au moins un point d'appui (15c) présent sur le reste de la carrosserie (1) et sur au moins un autre point d'appui (15d) sur le vantail (5 ; 5a, 5b), et l'axe de rotation (13) est situé entre les points d'appui (15c, 15d), dans une direction sensiblement perpendiculaire à celle de l'étendue du vantail (5 ; 5a, 5b) entre ces points d'appui.

2. Procédé selon la revendication 1,
**caractérisé en ce que**
l'axe de rotation (13) est parallèle, à l'étendue de surface du vantail (5 ; 5a, 5b) de préférence verticale.

3. Procédé selon la revendication 1 ou 2,
**caractérisé en ce que**
la butée mécanique (15) vient reposer sur au moins deux points d'appui (15c) sur le reste de la carrosserie (1) et sur au moins un autre point d'appui (15d) sur le vantail (5 ; 5a, 5b), et l'axe de rotation (13) est situé dans la zone des deux points d'appui (15c), dans une direction sensiblement perpendiculaire à l'étendue de surface du vantail (5 ; 5a, 5b).

4. Procédé selon l'une des revendications 1 à 3,
**caractérisé en ce qu'**
un dispositif de manoeuvre (11) du vantail (5 ; 5a, 5b) approche la butée mécanique (15) de manière sensiblement perpendiculaire à l'étendue de surface du vantail (5 ; 5a, 5b).

5. Procédé selon l'une des revendications 1 à 4,
**caractérisé en ce que**
la butée mécanique (15) et la ventouse pneumatique (16) forment une unité de simulation de coin de verrouillage (10) qui peut pivoter autour d'un axe de rotation (13) commun sensiblement vertical, et on approche l'unité (10) approche du vantail (5 ; 5a, 5b), ajusté et maintenu en alignement avec la carrosserie (1) dans la position de montage ajustée grossièrement, de manière sensiblement perpendiculaire à l'étendue de surface du vantail (5 ; 5a, 5b), jusqu'à ce que la butée mécanique (15) vienne en appui sur au moins deux points d'appui (15c) sur le reste de la carrosserie (1) et que le vantail (5 ; 5a, 5b) soit alors attiré sous l'effet de la ventouse pneumatique (16) contre la butée mécanique (15).

6. Procédé selon l'une des revendications 1 à 5,
**caractérisé en ce que**
la butée (15) est attirée contre le reste de la carrosserie (1) au moyen d'une ventouse pneumatique supplémentaire (21).

7. Dispositif (10) permettant de régler les dimensions d'un espacement entre un vantail mobile (5 ; 5a, 5b) d'un véhicule automobile et le reste de la carrosserie (1) du véhicule automobile, comportant des moyens d'ajustage et de maintien du vantail (5 ; 5a, 5b) en alignement avec la carrosserie (1) dans une position de montage ajustée grossièrement, des moyens pour l'enregistrement des dimensions de l'espacement et des moyens pour l'ajustage et pour la fixation articulée du vantail (5 ; 5a, 5b) dans une position de montage précise permettant de respecter le plus exactement possible des dimensions prédéfinies de l'espacement, les moyens d'ajustage du vantail (5 ; 5a, 5b) dans la position de montage bien ajustée présentant une ventouse pneumatique (16) et une butée mécanique (15) fixe par rapport au reste de la carrosserie (1) et pivotant librement autour d'un axe de rotation (13),
**caractérisé en ce que**
la ventouse pneumatique (16) attire le vantail (5 ; 5a, 5b) contre la butée mécanique (15) et la butée mécanique (15) vient reposer sur au moins un point d'appui (15c) sur le reste de la carrosserie (1) et sur au moins un autre point d'appui (15d) sur le vantail (5 ; 5a, 5b), et l'axe de rotation (13) est situé entre les points d'appui (15c, 15d), dans une direction sensiblement perpendiculaire à celle de l'étendue du vantail (5 ; 5a, 5b) entre ses points.

8. Dispositif (10) selon la revendication 7,
**caractérisé en ce que**
l'axe de rotation (13) est parallèle à la surface du vantail (5 ; 5a, 5b) de préférence verticale.

9. Dispositif (10) selon la revendication 7 ou 8,
**caractérisé en ce que**
la butée mécanique (15) vient reposer sur au moins deux points d'appui (15c) sur le reste de la carrosserie (1) et sur au moins un autre point d'appui (15d) sur le vantail (5 ; 5a, 5b), et l'axe de rotation (13) est situé dans la zone des deux points d'appui (15c), dans une direction sensiblement perpendiculaire à l'étendue de surface du vantail (5 ; 5a, 5b).

10. Dispositif (10) selon l'une des revendications 7 à 9,
**caractérisé en ce que**
la butée mécanique (15) est supportée de manière résiliente au moyen d'un premier élément résilient (19) et est sensiblement perpendiculaire à l'étendue de surface du vantail (5 ; 5a, 5b).

11. Dispositif (10) selon l'une des revendications 7 à 10,
**caractérisé en ce que**
la butée mécanique (15) est maintenue dans une position de pivotement préférée autour de l'axe de rotation (13) au moyen d'un second élément résilient (20).

12. Dispositif (10) selon l'une des revendications 7 à 11,
**caractérisé en ce que**
la ventouse pneumatique (16) et la butée mécanique (15) forment une unité de simulation de coin de verrouillage (10) qui peut pivoter autour d'un axe de rotation (13) commun.

13. Dispositif (10) selon la revendication 12,
**caractérisé en ce que**
la ventouse pneumatique (16) est une ventouse à soufflet, et une partie (15b) de la butée mécanique (15) sur laquelle le vantail (5 ; 5a, 5b) vient s'appuyer, est située à l'intérieur du soufflet.

14. Dispositif (10) selon l'une des revendications 7 à 13,
**caractérisé en ce que**
le dispositif (10) présente une ventouse pneumatique supplémentaire (21) qui maintient fermement le dispositif (10) contre le reste de la carrosserie (1).

15. Dispositif (10) selon la revendication 14,
**caractérisé en ce que**
la ventouse pneumatique supplémentaire (21) est disposée sur la butée (15) dans la zone du point d'appui (15c) contre lequel repose le reste de la carrosserie (1).
